# EUROPEAN PATENT APPLICATION

(11) **EP 2 225 938 A1**
(43) Date of publication of application: **08.09.2010**
(21) Application number: 09002850.7
(22) Date of filing: 02.03.2009
(51) Int. Cl.: A01K 97/12

(54) **Electronic bite indicator**

(71) Applicant: JiangSu Holly Corporation, Nanjing Jiangsu 210001 (CN)
(72) Inventor: Gardner, Mark, Ceaulmont 36200 (FR)
(74) Representative: Sanderson, James L.C.

(57) **Abstract**

An electronic fish bite alarm is a device used in fishing for indicating the movement at the fishing line. The electronic fish bite alarm has a numbered wheel (15) which is turned by movement of the fishing line (16) and gives a visual indication of how far and in which direction the fishing line (16) has moved, by reading the digits from the numbered dial against a fixed pointer (12).

## Description

### Technical Field

This invention relates to an electronic fish bite atarm, which has a visible moving numbered dial, which provides a visual indication o the fishing line movement

### Background Art

An electronic fish bite alarm is a device, well known to fishermen, used in fishing with a rod and line to indicate line movement by means of an audible sound or visual indication by a L.E.D when the line moves forwards or backwards. In some types of fishing, such as carp fishing it is desirable to know not only whether a fish has taken the bait and hence caused movement of the fishing line, but also to know in which direction the line has moved and how far. This is a special type of electronic bite alarm that includes a visible moving numbered dial. If the fish, having taken the bait, starts to swim or move away from the rod, the line moves in a forward direction, in turn the numbered dial turns clockwise. On the other hand, if the line moves backwards, the numbered dial will tom anti-clockwise. This invention is a special type of electronic ish bite alarm which not only provides a visual indication of movement of t ie fishing line by the means of a numbered dial, but can also show how far the line has moved and in which direction, by reading the digits from the numbered dial against a fixed pointer.

### Brief Description of Figures in the Drawings

Figure 1, shows a complete electronic bite alarm according to the invention.

Figure 2, shows the fishing line, the line contact wheel, connecting shaft and numbered dial.

### Best Mode for Carrying Out the Invention

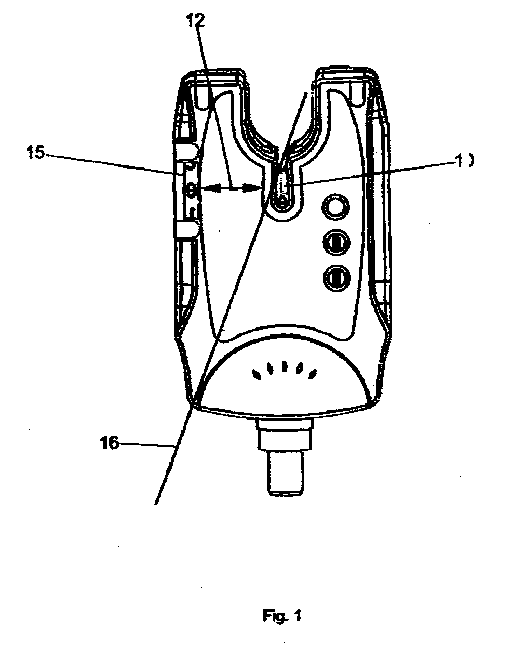

In Figure 1 the complete electronic bite alarm is shown which includes the numbered dial 15, fishing line 16, the fine contact wheel 10, and the fixed pointer 12 The fixed pointer 12 allows the reading of the fig ires on the numbered dial 15.

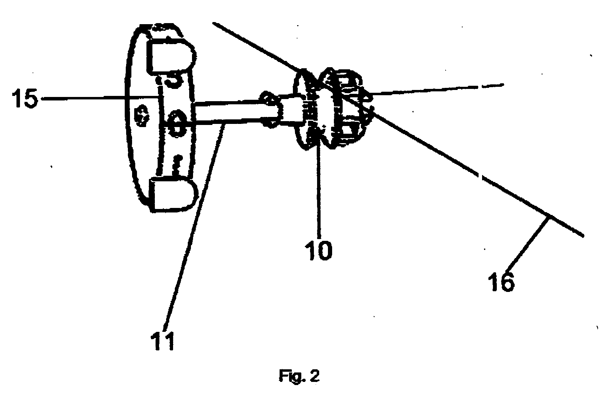

In Figure 2 the numbered dial 15, and the line contact wheel 10, share the same shaft 11, so that when the tine contact wheel 10 turns the numbered dial 15 turns simultaneously and in the same direction. The figure on the numbered dial 15, which the fixed pointer 12 points to (see Figure 1), should be initially set to 0. When the dial 10 is turned by the movement of the fishing line 16, the number on the numbered wheel 15, which the fixed pointer 12 points to (see Figure 1), will change. By reading 1 he numbers on the dial, anglers can tell how far the fishing line 16 has moved forwards or backwards.

## Claims

1. This invention relates to an electronic fish bite alarm used in fish ng, which provides a visible indication of fishing line directional movement and, distance travelled by the means of a moving additional numbered wheel or just a numbered line contact wheel, which can give a reading indicated by a fixed pointer when the fishing line moves away from or towards the fishing rod.

2. An electronic fish bite alarm as in claim 1, in which the moving line contact wheel has a numbered dial

3. An electronic fish bite alarm as in claim 1, in which the additional wheel has a numbered dial.

4. An electronic fish bite alarm as in claim 1. which has a fixed pointer to register the movement of the numbered dial or dials.
